(19) Europäisches Patentamt
European Patent Office
Office européen des brevets

(11) EP 0 504 922 B1

(12) **EUROPÄISCHE PATENTSCHRIFT**

(45) Veröffentlichungstag und Bekanntmachung des Hinweises auf die Patenterteilung:
**17.01.1996 Patentblatt 1996/03**

(51) Int Cl.⁶: **C09B 67/00**, C09B 19/02

(21) Anmeldenummer: **92104888.0**

(22) Anmeldetag: **20.03.1992**

(54) **Neue Pigmentzubereitungen auf Basis von Dioxazinverbindungen**

New pigment preparations on the basis of dioxazine-compounds

Nouvelle préparation de pigment à base des composés dioxaziniques

(84) Benannte Vertragsstaaten:
**CH DE FR GB IT LI**

(30) Priorität: **22.03.1991 DE 4109489**

(43) Veröffentlichungstag der Anmeldung:
**23.09.1992 Patentblatt 1992/39**

(73) Patentinhaber:
**HOECHST AKTIENGESELLSCHAFT**
**D-65926 Frankfurt am Main (DE)**

(72) Erfinder:
- **Dietz, Erwin, Dr.**
  **W-6233 Kelkheim (Taunus) (DE)**
- **Urban, Manfred**
  **W-6200 Wiesbaden (DE)**

(56) Entgegenhaltungen:
**EP-A- 0 163 113**
**EP-A- 0 321 919**
**EP-A- 0 395 988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 504 922 B1

## Beschreibung

Die vorliegende Erfindung betrifft neue Pigmentzubereitungen mit verbesserten coloristischen und rheologischen Eigenschaften, ein Verfahren zur Herstellung derselben sowie deren Verwendung zum Pigmentieren von hochmolekularen Materialien.

Die bei ihrer Synthese oder nach dem Finish anfallenden organischen Pigmente sind in vielen Fällen für den direkten Einsatz zum Pigmentieren hochmolekularer Materialien ungeeignet Oft treten aus einem solchen Anlaß Schwierigkeiten auf, wie z.B. unvollständige Dispergierung und Flockulation, weshalb die optimale Farbstärke und erforderliche Feinheit dann nicht erreicht werden. Ungenügend dispergierte Pigmente können auch bei der Weiterverarbeitung stören, insbesondere kann dieser Umstand in niedrigviskosen Systemen leicht zu Sedimentationsproblemen führen. Des weiteren lassen sich Flockulationen bei der Dispergierung, Lagerung oder Weiterverarbeitung nicht ausschließen, so daß es zu unerwünschten rheologischen Veränderungen des Systems sowie zu Oberflächenstörungen, Farbstärke- und Glanzverlusten eines applizierten Films kommt.

Um die anwendungstechnischen Eigenschaften von Pigmenten zu verbessern, ist es daher von Vorteil, durch Zugabe von Pigmentdispergatoren zum rohen Syntheseerzeugnis bzw. vorgefinishten Produkt, Pigmentzubereitungen herzustellen, die gegenüber dem entsprechenden Basispigment eine deutliche Qualitätssteigerung erkennen lassen. In dieser Hinsicht gibt es eine Anzahl von Vorschlägen zur Beeinflussung des rheologischen Verhaltens von Pigmenten, die aber nicht immer das erhoffte Resultat erbringen:

So ist beispielsweise in der DE-OS 31 06 906 beschrieben, daß man durch Vermischen von Pigmenten mit strukturell analogen Pigmentderivaten, die durch Einführung eines Sulfonamidrestes in das betreffende Molekül substituiert wurden, Pigmentzubereitungen mit hervorragenden coloristischen Eigenschaften erhält. Die dort erwähnten Pigmentzubereitungen auf Basis von C.I. Pigment Violet 23 weisen aber in Lacken, insbesondere in Acryl-Melaminharz-Lacken erhebliche coloristische Mängel auf.

Weiterhin sind aus der DE-OS 30 31 301 Pigmentzubereitungen bekannt, die aus einem Pigment und einer sulfonamidgruppenhaltigen, farblosen aromatischen Verbindung von nicht identischer Struktur bestehen. Pigmentzubereitungen dieses Typs genügen indessen nicht den Anforderungen hinsichtlich der rheologischen und coloristischen Eigenschaften.

In der offengelegten EP-PA 0 163 113 werden schließlich Farbsalze anionischer Farbstoffe auf Basis von Dioxazinverbindungen und sekundären Aminen erläutert, die man zum Einfärben von Papier verwenden kann. Für Pigmentzubereitungen sind derartige Farbsalze bislang noch nicht eingesetzt worden.

Aus der Sicht der eingangs diskutierten Erfahrungen vom Stand der Technik bestand die Aufgabe für die nachfolgend definierte Erfindung somit in der Weiterentwicklung von für ihren beabsichtigten Einsatzzweck ausgerichteten Pigmentzubereitungen vom Dioxazintyp.

In Lösung der gestellten Aufgabe wurde nun gefunden, daß man durch die Mitwirkung von produktspezifischen Pigmentdispergatoren auf Basis salzartiger Sulfonsäurederivate von Dioxazinverbindungen den damit behandelten Ausgangspigmenten ein gegenüber dem bisherigen Standard überiegenes anwendungstechnisches Verhalten verleihen kann. Die auf diese Weise erzeugten Pigmentzubereitungen zeichnen sich durch leichte Dispergierbarkeit, hohe Flokkungsstabilität und hervorragende rheologische und coloristische Eigenschaften in Acrylharzlacken aus.

Gegenstand der Erfindung sind somit Pigmentzubereitungen, gekennzeichnet, durch einen Gehalt an

a) einer Dioxazinverbindung der Formel I als Basispigment

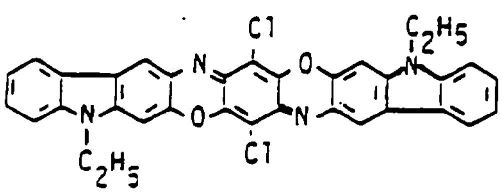

(I)

und als Pigmentdispergator(en) an

b) einer Dioxazinverbindung der allgemeinen Formel II

$$Q[SO_3^- X^+]_n \text{ (II)}, \qquad \text{(II)},$$

in welcher

Q für einen n-wertigen Rest der Basisstruktur entsprechend Formel I steht;

$X^+$ das Hydron $H^+$ oder das Äquivalent $M^{m+}/m$ eines m-wertigen Metallkations bezeichnet, wobei m für den

betreffenden Fall dann übereinstimmend eine der Zahlen 1, 2 oder 3 ist, wie z.B. $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ oder $Fe^{3+}$;
oder ein Ammoniumion mit der Struktur $N^+R^1R^2R^3R^4$ definiert, wobei die Substituenten $R^1$, $R^2$, $R^3$ und $R^4$ am quartären N-Atom einzeln für sich genommen sowie unabhängig voneinander jeweils als Wasserstoff oder eine der Gruppen $C_1$-$C_{30}$-Alkyl, $C_2$-$C_{30}$-Alkenyl oder $C_5$-$C_{30}$-Cycloalkyl, die durch Hydroxy, Di-($C_1$-$C_4$-alkyl)-amino, Carboxy oder Carboxamid substituiert sein können, oder weiterhin als Phenyl, durch $C_1$-$C_{18}$-Alkyl substiuiertes Phenyl oder als eine (Poly)alkylenoxygruppe vom Typ $-(CHR^5-CH_2-O-)_k-H$, in der $R^5$ für Wasserstoff oder $C_1$-$C_4$-Alkyl steht und k eine Zahl von 1 bis 30 ist, ausgewiesen sind;
oder wobei die Substituenten $R^1$ und $R^2$ gemeinsam sowie zusammen mit dem angrenzenden N-Atom ein aliphatisches, fünf- bis siebengliedriges heterocyclisches System, das ggf. noch weitere ringangehörige Heteroatome wie ein O-, S- und/oder N-Atom enthält, bilden können,
oder wobei die Substituenten $R^1$ und $R^2$ gemeinsam sowie zusammen mit dem angrenzenden N-Atom ein aromatisches, fünf- bis siebengliedriges heterocyclisches System, das ggf. noch weitere ringangehörige Heteroatome wie ein O-, S- und/oder N-Atom enthält und das ggf. zusätzlich benzkondensierte Ringe aufweist, bilden können,
während die in den beiden zuvor beschriebenen Ausgestaltungen des Cyclammoniumions an der Ringbildung jeweils nicht beteiligten R's für Wasserstoff stehen; und worin

n einen Zahlenwert zwischen 1 und 4 angibt;

und/oder

c) einer Dioxazinverbindung der allgemeinen Formel III

$$Q\text{-}[\text{-}SO_3^- Z^{r+} pY^-]_n \quad (III),$$

in welcher

Q für einen n-wertigen Rest der Basisstruktur entsprechend Formel I steht;

$Z^{r+}$ das Äquivalent $M^{r+}/r$ eines r-wertigen Metallkations bezeichnet, wobei r für den betreffenden Fall dann übereinstimmend die Zahl 2 oder 3 ist, wie z.B. $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ oder $Fe^{3+}$;

$Y^-$ einen der anionischen Reste $R^6$-$SO_3^-$ oder $R^7$-$COO^-$ charakterisiert, wobei die Substituenten $R^6$ und $R^7$ unabhängig voneinander jeweils als eine der Gruppen $C_1$-$C_{30}$-Alkyl oder $C_2$-$C_{30}$-Alkenyl, die ihrerseits geradlinig oder verzweigt sind und innerhalb der (einer) Kette durch eine brückenbildende Gruppierung aus der Reihe -O-, -NH-, $-NR^8-$, -S-, ggf. substituiertes Phenylen (besonders 1,4-Phenylen), -CO-, $-SO_2-$, $-CHR^9-$ oder $-CR^9R^{10}-$, oder durch eine sich ggf. wiederholende Kombination von mindestens zwei solcher Brückenglieder unterschiedlichen Typs unterbrochen sein können und in denen $R^8$, $R^9$ und $R^{10}$ gleiches oder unterschiedliches $C_1$-$C_4$-Alkyl darstellen, oder weiterhin als Phenyl, durch $C_1$-$C_{30}$-Alkyl und/oder $C_1$-$C_4$-Alkoxy substituiertes Phenyl oder als eine (Poly)alkylenoxygruppe vom Typ $-(CHR^{11}-CH_2-O-)_k-H$, in der $R^{11}$ für Wasserstoff oder $C_1$-$C_4$-Alkyl steht und k eine Zahl von 1 bis 30 ist, ausgewiesen sind; und worin

n einen Zahlenwert zwischen 1 und 4 sowie

p einen aus der Differenz (r - 1) errechenbaren Zahlenwert angeben;

wobei im Falle mehrfachen Vorhandenseins (n> 1) der Bestandteile X, Y und Z in den Verbindungen gemäß Formeln II und/oder III die Bedeutung der eben erwähnten Symbole nicht identisch sein muß. Vorzugsweise wird bei mehreren Salzresten bezüglich des Aufbauprinzips derselben aber Übereinstimmung bestehen.

In diesem Zusammenhang sollen erfindungsgemäß vor allem Pigmentzubereitungen herausgestellt werden, worin neben dem Basispigment a) als Pigmentdlspergator b) eine Dioxazinverbindung der eingangs erläuterten allgemeinen Formel II vorliegt, in welcher

Q wie vorstehend angegeben definiert ist,

$X^+$ ein Kation vom Typ $H^+$ oder $Ca^{2+}/2$ oder ein Ammoniumion mit der Struktur $N^+H_3R^4$ bezeichnet; wobe $R^4$ als $C_{12}$-$C_{18}$-Alkyl, wie z.B. eine Lauryl-, Palmityl- oder Stearylgruppe, oder als $C_{16}$-$C_{18}$-Alkenyl, wie z.B. die Oleylgruppe, oder insbesondere jedoch als $C_{20}$-Cycloalkyl auf Basis eines natürlichen Harzes, das überwiegend aus Abietylamin besteht, ausgewiesen ist; sowie

n einen Zahlenwert zwischen 2 und 3 angibt.

Interesse als Pigmentdispergatoren b) haben erfindungsgemäß auch solche Dioxazinverbindungen der obengenannten allgemeinen Formel II erlangt, in welcher

Q die zuvor dargestellte Bedeutung zukommt;

$X^+$ ein Ammoniumion mit der Struktur $N^+R^1R^2R^3R^4$ definiert, wobei $R^1$ und $R^2$ gemeinsam sowie zusammen mit dem angrenzenden N-Atom einen aliphatischen, heterocyclischen Fünf- oder Sechsring mit jeweils 1 bis 3 ringangehörigen, gleichen oder unterschiedlichen Heteroatomen (in der Hauptsache Stickstoff) bilden, wie z.B. vom Pyrrolidon-, Imidazolidin-, Hexamethylenimin-, Piperidin-, Piperazin- oder Morpholin-Typ,
oder wobei $R^1$, $R^2$ und $R^3$ gemeinsam sowie zusammen mit dem angrenzenden N-Atom einen aromatischen, heterocyclischen Fünf- oder Sechsring mit 1 bis 3 ringangehörigen, gleichen oder unterschiedlichen Heteroatomen (in der Hauptsache Stickstoff) bilden und ein derartiger Heteroaromat ggf. zusätzlich einen ankondensierten benzoiden Ring aufweist, wie z.B. Pyrrol-, Imidazol-, Pyridin-, Picolin-, Pyrazin-, Chinolin- oder Isochinolin-Typ,
und wobei dazu nicht beitragende R's am N-Atome jeweils Wasserstoff sind; sowie

n einen Zahlenwert zwischen 2 und 3 angibt.

Als besonders wertvolle Pigmentdispergatoren c) werden nach der Erfindung schließlich Dioxazinverbindungen mit der vorhergehend erwähnten allgemeinen Formel III eingestuft, in welcher

Q dem dafür weiter oben beschriebenen Merkmal entspricht,

$Z^{r+}$ das Kation $Ca^{2+}$ bezeichnet und daher r = 2 beträgt,

$Y^-$ den Rest $R^6$-$SO_3^-$ charakterisiert, wobei $R^6$ als $C_8$-$C_{16}$-Alkylphenyl ausgewiesen ist, wie z.B. die Dodecylphenylgruppe,
oder den Rest $R^7$-$COO^-$charakterisiert, wobei $R^7$ als durch ein Brückenglied vom Typ -CO- und/oder -$NR^8$- ($R^8$ = H oder $C_1$-$C_4$-Alkyl) ggf. unterbrochenes $C_{11}$-$C_{19}$-Alkenyl ausgewiesen ist, wie z.B. die Oleylsarkosinatgruppe auf Basis von natürlicher Ölsäure; sowie

n einen Zahlenwert zwischen 2 und 3 angibt und für

p sich der Zahlenwert 1 errechnet.

Erfindungsgemäß als Pigmentdispergator b) und/oder c) eingesetzte sulfonsäuregruppenhaltige Dioxazinverbindungen der allgemeinen Formeln II bzw. III sind zum Teil in der Fachliteratur beschrieben. Sie lassen sich beispielsweise nach bekannten Verfahren herstellen durch Sulfonierung des Basispigments der Formel I mittels konzentrierter Schwefelsäure oder rauchender Schwefelsäure (Oleum) sowie durch Sulfochlorierung des erwähnten Ausgangsstoffes mittels Chlorsulfonsäure samt anschließender Verseifung in Wasser. Die weitergehende Überführung in die speziellen Salze, davon abgeleiteten salzartigen Derivate oder Ammoniumverbindungen wird so bewerkstelligt, daß man die vorgängig gewonnenen Sulfonsäuren bzw. deren Alkali- oder Erdalkalisalze in wäßriger oder wäßrig-organischer, homogener oder inhomogener Phase bei pH-Werten im Bereich von 3 bis 9 sowie bei Temperaturen zwischen 0° und 100 °C mit einem die Entstehung des beabsichtigten Endproduktes der Formel II besorgenden Metallsalz oder Amin umsetzt. Die Salzbildung kann auch in Gegenwart von sulfonsäuregruppenfreiem Dioxazinpigment der Formel I erfolgen, d.h. ggf. während der Präparierung des Basispigments.

Der erfindungsgemäß erzielbare Dispergatoreffekt beruht auf einer Modifizierung der Oberflächenstruktur des Basispigments durch gleichmäßige Beschichtung mit den sulfonsäuregruppenhaltigen Dioxazinverbindungen der Formeln II und/oder III. Die Wirksamkeit der Pigmentdispergatoren und die Qualität der damit erzeugten Pigmentzubereitungen sind in der Regel abhängig vom Zeitpunkt der Dispergatorzugabe zum Rohpigment und in welcher Phase des diesbezüglichen Herstellungsprozesses diese Beimischung erfolgt. Einen großen Einfluß hat in dieser Beziehung auch die Art und Weise der Applikation des PIgmentdispergators auf das Pigment.

Die im Einzelfall benötigte Menge an Dispergator richtet sich einmal nach der Teilchengröße, Teilchenform sowie Oberflächenbeschaffenheit des Basispigments und zum andern nach dem Platzbedarf der Pigmentdispergatoren sowie dem Umfang der zur Verfügung stehenden Pigmentoberfläche. Die jeweilige optimale Konzentration des Pigmentdispergators muß durch orientierende Vorversuche ermittelt werden, da die Verbesserung der Eigenschaften der Pigmente nicht immer linear mit der Pigmemtdispergatormenge einhergeht. Die volle Entfaltung der Wirksamkeit wird erreicht, wenn der Pigmentdispergator fest an der Pigmentoberfläche verankert ist.

Das Ansetzen der beanspruchten Pigmentzubereitungen kann auf verschiedene Weise erfolgen. So können die Dispergatoren erfindungsgemäß im Verlauf des Herstellungsverfahrens der Zubereitung dem Basispigment als wasserfeuchter Preßkuchen vor der Trocknung oder als bereits trockenes Pulver zugesetzt werden, und zwar

a) schon im Stadium der Pigmentsynthese, wie z.B. dem Umsetzungsmedium oder bevorzugt dem feuchten Preßkuchen des Basispigments,

b) im Rahmen eines Feinverteilungsprozesses des grobkristallinen Rohpigments, wie z.B. bei der

b1) Trockenmahlung mit und ohne Salz,
b2) Naßmahlung mit oder ohne Lösungsmittel,
b3) Umfällung aus Polyphosphorsäure,
b4) Überführung des Rohpigments in die Salzform mittels Schwefelsäure, wobei die Schwefelsäurekonzentration so gewählt wird, daß keine Sulfonierung auftritt,
b5) Überführung des Rohpigments in die Salzform mittels einer Mischung aus Chlorwasserstoff und Alkoholen,
b6) Umfällung aus aromatischen Sulfonsäuren,
b7) Umfällung aus Halogencarbonsäuren,

c) dem schon feinteiligen Rohpigment vor, während oder nach einer anschließenden Lösungsmittelfinish-Behandlung,
d) bei einer mechanischen Vermischung im trockenen Zustand, wie z.B. von gemahlenen Dispergatoren mit dem Pigmentpulver, und schließlich
e) erst bei der Einarbeitung des Pigments in das in Aussicht genommene Anwendungsmedium.

Als bevorzugte Techniken zur Erzeugung der Pigmentzubereitungen werden erfindungsgemäß die Trocken- und Naßmahlung in Betracht gezogen. Die Zugabe der Pigmentdispergatoren läßt sich beispielsweise im Verlauf einer Trokkenmahlung des Rohpigments mit oder ohne zusätzliche Mahlhilfsmittel auf einer Roll- oder Schwingmühle, oder im Zuge einer Naßmahlung des Rohpigments in wäßrigem, wäßrig-organischem oder organischem Mahlmedium auf einer Schwing-, Roll- oder Perlmühle durchführen. Besonders bewährt hat sich die wäßrige Mahlung auf Perlmühlen. Als gleichfalls zuverlässig hat sich die Anwendung der Dispergatoren vor oder während eines Druckfinishs für das zugrudeliegende Pigment in wäßrigem, wäßrig-saurem oder wäßrig-organischem Medium erwiesen.

Die bei der Herstellung der Pigmentzubereitungen nach dieser Erfindung dem Basispigment a) zuzusetzenden Mengen an Pigmentdispergatoren b) und/oder c) sind - soweit davon die angestrebte Pigmentqualität nicht negativ beeinflußt wird - in Richtung auf einen bestimmten Maximalwert nicht beschränkt, doch kommt im allgemeinen ein Gehalt von 0,1 bis 30 Gew.-%, insbesondere von 5 bis 15 Gew.-% an Dispergator, berechnet auf das jeweilige Pigmentgewicht, in Betracht.

Die beanspruchten Pigmentzubereitungen können neben Pigment a) und Pigmentdispergatoren b) und/oder c) noch weitere Bestandteile enthalten, wie beispielsweise Tenside, Harze oder Antistaubmittel.

Pigmentzubereitungen im Sinne der vorliegenden Erfindung bestehen also im wesentlichen aus

a) 99,5 bis 70 Gew.-% Basispigment der Formel I,
b) und c) 0,5 bis 30 Gew.-% mindestens eines der Dispergatoren der Formeln II und/oder III,
d) 0 bis 5 Gew.-% eines nichtionischen Tensids, und
e) 0 bis 5 Gew.-% von üblichen Zusatzstoffen,

wobei die Anteile der jeweiligen Komponenten auf das Gesamtgewicht (100 %) der Zubereitung bezogen sind.

Die erfindungsgemäßen Pigmentzubereitungen lassen sich zum Pigmentieren (Einfärben) von hochmolekularen organischen Materialien natürlicher oder synthetischer Herkunft einsetzen:
Hochmolekulare organische Materialien, die mit den beanspruchten Pigmentzubereitungen coloriert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Pigmentzubereitungen als Toner oder in Form von Präparationen oder Dispersionen zu benutzen. Bezogen auf das zu pigmentierende hochmolekulare organische Material setzt man die beanspruchten Pigmentzubereitungen in einer Menge von vorzugsweise 1 bis 10 Gew.-% ein.

Besonders bevorzugte Lacksysteme sind in dieser Hinsicht Einbrennlacke vom Typ der Acrylharz-Lacke. Weitere geeignete Lacksysteme sind Einbrennlacke aus der Klasse der Alkyd-/Melaminharz-Lacke sowie Zweikomponentenlacke auf Basis von mit Polyisocyanat vernetzbaren Acrylharzen. Von der Vielzahl der pigmentierbaren Druckfarben sind Druckfarben auf Basis Nitrocellulose besonders zu erwähnen.

Die erfindungsgemäßen Pigmentzubereitungen sind in vielen Anwendungsmedien leicht und bis zu hohen Feinheiten dispergierbar. Solche Dispersionen besitzen eine hohe Flockungsstabilität und zeigen hervorragende rheologische Eigenschaften selbst bei hoher Pigmentierung. Mit ihnen lassen dch Lackierungen und Drucke von hoher Farbtärke, hohem Glanz und hoher Transparenz mit ausgezeichneten Echtheitseigenschaften erzielen.

Zur Prüfung der Eigenschaften der beanspruchten Pigmentzubereitungen auf dem Lacksektor wurden aus der Vielzahl der bekannten Systeme ein Alkyd-/Melaminharz-Lack (AM6) auf Basis eines mittelöligen, nicht-trocknenden Alkydharzes aus synthetischen Fettsäuren und Phthalsäureanhydrid und eines mit Butanol veretherten Melaminharzes und Anteilen eines nicht-trocknenden Alkydharzes auf Basis von Ricinensäure (kurzölig) sowie ein Acrylharz-Einbrennlack auf Basis einer nicht-wäßrigen Dispersion (TSA) ausgewählt. In den nachfolgenden Beispielen wird darauf unter der Bezeichnung AM6 bzw. TSA verwiesen.

Die Rheologie des Mahlguts nach der Dispergierung (Millbase-Rheologie) wird anhand der folgenden fünfstufigen Skala bewertet:

| | | | |
|---|---|---|---|
| 5 | dünnflüssig | 2 | leicht gestockt |
| 4 | flüssig | 1 | gestockt |
| 3 | dickflüssig | | |

Nach dem Verdünnen des Mahlguts auf die Pigmentendkonzentration wurde die Viskosität mit dem Viskospatel nach Rossmann, Typ 301, der Firma Erichsen beurteilt.

Glanzmessungen erfolgten an Folienaufgüssen unter einem Winkel von 10° nach DIN 67530 (ASTMD 523) mit dem "multigloss"-Glanzmeßgerät der Firma Byk-Mallinckrodt.

Die Leitfähigkeit des Lacks wurde mit einer Randsburgzelle gemessen.

In den nachstehenden Beispielen beziehen sich Teile jeweils auf Gewichtsteile und Prozente jeweils auf Gewichtsprozente der so beschriebenen Substanzen. Die zur Identifizierung benutzte Gattungsbezeichnung für die erfindungsgemäß als Farbmittel eingesetzte Dioxazinverbindung C.I. Pigment Violet 23 sowie die darauf gerichtete C.I.-Nummer 51319 sind dem COLOUR INDEX, 3. Auflage 1971, Band 4 entnommen.

Beispiel 1

30 g grobkristallines Rohpigment (Pigment Violet 23), hergestellt in salzfreier Form entsprechend BIOS Final Report 960, Seite 75, werden in ein zylindrisches 1-Liter-Kunststoffgefäß eingebracht, das mit 1400 g Cylpebs (aus Korund, von 12 mm Durchmesser, Hersteller: Groß GmbH, Hof) als Mahlkörper gefüllt ist. Dieser Vorlage werden noch 3 g Pigmentdispergator der allgemeinen Formel II, worin $X^+$ für das $H^+$-Ion steht und n die Zahl 3 ist, sowie 3 g Stearylamin zugegeben und das Gemisch wird nun 4 Stunden lang unter Schütteln auf einer Schwingmühle vom Typ ®Vibratom (Hersteller: Siebtechnik Mühlheim) fein vermahlen. Danach wird das Mahlgut von den Mahlkörpern abgesiebt. Man erhält 29 g Mahlgut.

29 g des obigen Mahlguts werden in 87,5 g Isobutanol (85 %ig) eingetragen und zunächst 24 Stunden bei 25 °C gerührt. Nach Zugabe von 150 ml Wasser bringt man die Mischung zum Sieden und beläßt dieselbe weitere 5 Stunden bei dieser Temperatur, worauf das Isobutanol durch Erhitzen bis auf 100 °C am Übergang azeotrop abdestilliert wird. Die Pigmentzubereitung wird dann abgesaugt, mit Wasser gewaschen und bei 80 °C getrocknet.

Man erhält 27,9 g einer Pigmentzubereitung, in der die als Pigmentdispergator eingesetzte Dioxazinverbindung jetzt nach dem Finish als Stearylammoniumsalz der allgemeinen Formel II vorliegt, worin $X^+$ die Gruppe $N^+H_3[CH_2-(CH_2)_{16}-CH_3]$ bedeutet und n die Zahl 3 ist.

Bei der Ausprüfung der Pigmentzubereitung im AM6-Lack werden transparente und farbstarke Lackierungen erzielt. Die Rheologie der Lacktarbe wird mit Note 5 eingestuft. Die Glanzmessung ergibt den Wert 80 und die Viskosität liegt bei 3,3".

Wird Beispiel 1 hingegen ohne Zusatz des Pigmentdispergators wiederholt, so zeigt das Erzeugnis folgende Resultate: Rheologie Note 1-2, Glanzwert 23 und Viskosität 7,1".

Beispiel 2

In einem Rührgefäß werden 125 g Isobutanol (85 %ig) vorgelegt, nacheinander mit 7,5 g Pigmentdispergator der allgemeinen Formel II, worin $X^+$ eine cycloaliphatisch substituierte Ammoniumgruppe auf Basis eines natürlichen Harzes, das überwiegend aus Abietylamin besteht, bedeutet und n die Zahl 2 ist, sowie mit 50 g feinteiligem Mahlgut (Pigment Violet 23), hergestellt gemäß Beispiel 1 der DE-PS 27 42 575, versetzt und zunächst 24 Stunden bei 25 °C nachgerührt. Danach werden 300 ml Wasser zugegeben, man bringt die Mischung zum Sieden und hält dieselbe weitere 5 Stunden bei dieser Temperatur. Anschließend wird das isobutanol durch Erhitzen bis auf 100 °C am Übergang azeotrop abdestilliert und die Pigmentzubereitung wird dann abgesaugt, mit Wasser gewaschen und bei 80 °C getrocknet.

Man erhält 56,9 g einer Pigmentzubereitung, mit der im TSA-Lack sehr transparente und farbstarke Lackierungen erzielt werden. Die Rheologie der Lackfarbe wird mit Note 5 eingestuft. Der Glanzwert beträgt 82 und die Viskosität liegt bei 3,7."

Wird das Beispiel 2 ohne Zusatz des Pigmentdispergators wiederholt, so ergibt das Produkt nur farbschwache und stark flockende Lackierungen. Die Rheologie hat dann Note 2, der Glanz den Wert 57 und die Viskosität 4,4".

Beispiel 3

In einem Rührgefäß werden 175 g Isobutanol (85 %ig) vorgelegt, nacheinander mit 5 g Pigmentdispergator der allgemeinen Formel II, worin $X^+$ für das $H^+$-Ion steht und n die Zahl 2 ist, 5 g Oleylamin sowie 50 g feinteiligem Mahlgut (Pigment Violet 23) wie in Beispiel 2 versetzt und zunächst 24 Stunden bei 25 °C gerührt. Nach Zugabe von 300 ml Wasser bringt man das Gemisch zum Sieden und hält es nochmals 5 Stunden bei dieser Temperatur. Anschließend wird das Isobutanol durch Erhitzen bis auf 100 °C am Übergang azeotrop abdestilliert, die Pigmentzubereitung wird dann abgesaugt, mit Wasser gewaschen und bei 80 °C getrocknet.

Man erhält 52,4 g einer Pigmentzubereitung, in der die als Pigmentdispergator eingesetzte Dioxazinverbindung jetzt nach dem Finish als Oleylammoniumsalz der allgemeinen Formel II vorliegt, worin $X^+$ die Gruppe $N^+H_3[CH_2-(CH_2)_7-CH=CH-(CH_2)_7-CH_3]$ darstellt und n die Zahl 2 ist.

Die Anwendung des Produktes im Nitrocellulosetiefdruck erbringt farbstarke Drucke von hoher Transparenz und hohem Glanz. Im AM6-Lack werden damit transparente und farbstarke Lackierungen erzielt. Die Rheologie der Lackfarbe wird mit Note 4-5 eingestuft. Der Glanzwert beträgt 70 und die Viskosität 3,1".

Wird Beispiel 3 ohne Zusatz des Pigmentdispergators wiederholt, so ergeben sich für dieses Produkt im AM6-Lack folgende Resultate: Rheologie Note 1-2, Glanzwert 20 und Viskosität 7,0". Im Nitrocellulosetiefdruck sind die Drucke deutlich matter.

Beispiel 4

In einem Rührgefäß werden 75 g Isobutanol (85 %ig) vorgelegt, nacheinander mit 50 g feinteiligem Mahlgut (Pigment Violet 23) wie in Beispiel 2 sowie 3,34 g Pigmentdispergator der allgemeinen Formel II, worin $X^+$ für das $Na^+$-Ion steht und n die Zahl 2,2 ist, als 87,7 %iger wasserfeuchter Preßkuchen versetzt und durch Zugabe von 5,7 g Ameisensäure (98 %ig) auf einen pH-Wert von 3,5 eingestellt Nach 1/2-stündigem Rühren wird eine Lösung von 2,25 g eines cycloaliphatischen Amins auf Basis eines natürlichen Harzes, das überwiegend aus Abietylamin besteht, in 50 g Isobutanol (85 %ig) im Verlauf von 1/4 Stunde zugetropft. Nun wird das Gemisch zunächst 24 Stunden bei 25 °C gerührt, anschließend wird es zum Sieden gebracht und nochmals 5 Stunden bei dieser Temperatur gerührt Nach azeotroper Destillation zur Entfernung des Isobutanols durch Erhitzen bis auf 100 °C am Übergang wird die Pigmentzubereitung abgesaugt, mit Wasser neutral gewaschen und bei 80 °C getrocknet.

Man erhält 43,2 g einer Pigmentzubereitung, in der die als Pigmentdispergator eingesetzte Dioxazinverbindung jetzt nach dem Finish als Abietylammoniumsalz der allgemeinen Formel II vorliegt, worin $X^+$ eine cycloaliphatisch substituierte Ammoniumgruppe auf Basis eines natürlichen Harzes, das überwiegend aus Abietylamin besteht, darstellt und n die Zahl 2,2 ist.

Im TSA-Lack werden damit sehr transparente und farbstarke Lackierungen erzielt. Die Rheologie der Lackfarbe wird mit Note 5 eingestuft. Der Glanz hat den Wert 86 und die Viskosität liegt bei 1,4".

Wird Beispiel 4 ohne Zusatz des Pigmentdispergators wiederholt, so fallen die Lackierungen mit diesem Produkt deutlich deckender und schwächer aus. Die Rheologie wird dann mit Note 5 bewertet. Der Glanzwert beträgt 63 und die Viskosität 1,8".

Beispiel 5

In einem Rührgefäß werden 150 l Wasser vorgelegt und nacheinander 50 kg grobkristallines Rohpigment (Pigment Violet 23), In salzfreier Form wie in Beispiel 1, und 4,26 kg Pigmentdispergator der allgemeinen Formel II, worin $X^+$ für das $H^+$-Ion steht und n die Zahl 2,6 ist, als 87,3 %iger wasserfeuchter Preßkuchen eingetragen. Die gebildete Suspension wird nun bei einem Durchsatz von 130 kg/h sowie einer Drehzahl von 900 U/min neunmal durch eine Rührwerkskugelmühle vom Typ ®Drais DCP-3 (Hersteller: Draiswerke GmbH, Mannheim) gefahren, die mit 26,5 kg Zirkoniummischoxidperlen vom Durchmesser 0,3-0,4 mm als Mahlkörper gefüllt ist. Während der Mahlung wird die Viskosität der Mahlgutsuspension durch portionsweise Zugabe von 50 l Wasser konstant gehalten.

250 g der angefallenen Mahlgutsuspension werden in einem Rührgefäß vorgelegt, mit 150 g Isobutanol (100 %ig) sowie 2 g 3-Diethylaminopropylamin versetzt und durch Zugabe von Ameisensäure auf einen pH-Wert von 3,5 eingestellt. Nach zunächst 24-stündigem Rühren bei 25 °C bringt man das Gemisch zum Sieden und läßt weitere 5 Stunden bei dieser Temperatur nachrühren. Dann wird das Isobutanol durch Erhitzen bis auf 100 °C am Übergang azeotrop abdestilliert, worauf die Pigmentzubereitung abgesaugt, mit Wasser neutral gewaschen und bei 80 °C getrocknet wird.

Man erhält 50,9 g einer Pigmentzubereitung, In der die als Pigmentdispergator eingesetzte Dioxazinverbindung jetzt nach dem Finish als Ammoniumsalz der allgemeinen Formel II vorliegt, worin $X^+$ die Gruppe $N^+H_3-CH_2-CH_2-CH_2-N$

$(C_2H_5)_2$ darstellt und n die Zahl 2,6 ist.

Im AM6-Lack werden damit transparente und farbstarke Lackierungen erzielt. Die Rheologie der Lackfarbe wird mit Note 3-4 eingestuft. Der Glanz hat den Wert 73 und die Viskosität liegt bei 4,0".

Wird Beispiel 5 ohne Einsatz des Pigmentdispergators wiederholt, so erbringt das Produkt folgende Resultate: Rheologie Note 1-2, Glanzwert 20 und Viskosität 7,9".

Beispiel 6

250 g der Mahlgutsuspension, hergestellt gemäß Beispiel 5, werden in einem Rührgefäß vorgelegt, mit 150 g Isobutanol (100 %ig) sowie 3 g Di-2-ethylhexylamin versetzt und nun zunächst 24 Stunden bei 25 °C gerührt. Anschließend bringt man das Gemisch zum Sieden und hält es unter Nachrühren weitere 5 Stunden bei dieser Temperatur. Dann wird das Isobutanol durch Erhitzen bis auf 100 °C am Übergang azeotrop abdestilliert, worauf die Pigmentzubereitung abgesaugt, mit Wasser neutral gewaschen und bei 80 °C getrocknet wird. Man erhält 52,1 g einer Pigmentzubereitung, in der die als Pigmentdispergator eingesetzte Dioxazinverbindung jetzt nach dem Finish als Ammoniumsalz der allgemeinen Formel II vorliegt, worin $X^+$ die Gruppe

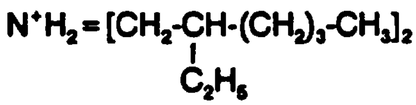

darstellt und n die Zahl 2,6 ist.

Im AM6-Lack werden damit transparente und farbstarke Lackierungen erzielt. Die Rheologie der Lackfarbe wird mit Note 5 eingestuft. Der Glanz hat den Wert 71 und die Viskosität liegt bei 3,3".

Wird Beispiel 6 ohne Einsatz des Pigmentdispergators wiederholt, so zeigt das Erzeugnis folgende Resultate: Rheologie Note 1-2, Glanzwert 23 und Viskosität 5,8".

Beispiel 7

250 g der Mahlgutsuspension, hergestellt gemäß Beispiel 5, werden in einem Rührgefäß vorgelegt, mit 150 g Isobutanol (100 %ig) sowie 1,3 g Triethylamin versetzt und nun zunächst 24 Stunden bei 25 °C gerührt. Anschließend bringt man das Gemisch zum Sieden und hält es unter Nachrühren weitere 5 Stunden bei Siedetemperatur. Dann wird das Isobutanol durch Erhitzen bis auf 100 °C am Übergang azeotrop abdestilliert, worauf die Pigmentzubereitung abgesaugt, mit Wasser neutral gewaschen und bei 80 °C getrocknet wird. Man erhält 49,7 g einer Pigmentzubereitung, in der die als Pigmentdispergator eingesetzte Dioxazinverbindung jetzt nach dem Finish als Ammoniumsalz der allgemeinen Formel II vorliegt, worin $X^+$ die Gruppe $N^+H \equiv (C_2H_5)_3$ darstellt und n die Zahl 2,6 ist.

Im TSA-Lack werden damit transparente und farbstarke Lackierungen erzielt. Die Rheologie der Lackfarbe wird mit Note 5 eingestuft. Der Glanz hat den Wert 70 und die Viskosität liegt bei 4,0".

Wird Beispiel 7 ohne Einsatz des Pigmentdispergators wiederholt, so ergeben sich mit diesem Produkt folgende Resultate: Rheologie Note 5, Glanzwert 41 und Viskosität 4,0".

Beispiel 8

500 g der Mahlgutsuspension, hergestellt gemäß Beispiel 5, werden in einem Rührgefäß vorgelegt und mit einer Lösung aus 300 g Isobutanol (100 %ig) und 7,1 g eines cycloaliphatischen Amins auf Basis eines natürlichen Harzes, das überwiegend aus Abietylamin besteht, versetzt. Nach zunächst 24-stündigem Rühren bei 25 °C bringt man das Gemisch anschließend zum Sieden und läßt es nochmals 5 Stunden bei dieser Temperatur nachrühren. Dann wird das Isobutanol durch Erhitzen bis auf 100 °C am Übergang azeotrop abdestilliert, worauf die durch Erhitzen bis auf 100 °C am Übergang azeotrop abdestilliert, worauf die Pigmentzubereitung abgesaugt, mit Wasser gewaschen und bei 80 °C getrocknet wird.

Man erhält 106,3 g einer Pigmentzubereitung, in der die als Pigmentdispergator eingesetzte Dioxazinverbindung jetzt nach dem Finish als Ammoniumsalz der allgemeinen Formel II vorliegt, worin $X^+$ eine cycloaliphatisch substituierte Ammoniumgruppe auf Basis eines natürlichen Harzes, das überwiegend aus Abietylamin besteht, darstellt und n die Zahl 2,6 ist.

Bei der Prüfung der Pigmentzubereitung im AM6-Lack werden transparente und farbstarke Lackierungen erzielt. Die Rheologie der Lackfarbe wird mit Note 5 eingestuft. Der Glanz hat den Wert 83, die Viskosität liegt bei 2,8" und die Leitfähigkeit des pigmentierten Lacks bei 0,7 Mikrosiemens. Die Überlackierechtheit ist einwandfrei.

Wird Beispiel 8 jedoch ohne Einsatz des Pigmentdispergators wiederholt, so ergibt die Rheologie dieses Produktes im AM6-Lack die Note 3, der Glanzwert beträgt 30, die Viskosität 5,9" und die Leitfähigkeit des pigmentierten Lacks 0,8

Mikrosiemens.

Bei der Anwendung im TSA-Lack werden mit der Pigmentzubereitung ebenfalls transparente und farbstarke Lackierungen erzielt. Die Rheologie der Lackfarbe wird mit Note 4-5 eingestuft. Der Gianz hat den Wert 83, die Viskosität liegt bei 10,7" und die Leitfähigkeit bei 0,45 Mikrosiemens. Die Überlackierechtheit ist einwandfrei. Die Pigmentzubereitung flockt nicht.

Ohne Mitwirkung der Pigmentdispergators fällt die Ausfärbung im TSA-Lack hingegen viel farbschwächer aus. Ein solches Pigment flockt stark. Die Rheologie ergibt dann die Note 4-5, der Glanzwert beträgt 48, die Leitfähigkeit 0,5 Mikrosiemens und die Viskosität 8,8".

Beispiel 9

7,5 g Pigmentdispergator der allgemeinen Formel II, worin $X^+$ für das $H^+$-Ion steht und n die Zahl 2 ist, werden in 210 ml Wasser eingetragen und durch Erhitzen auf 60 °C gelöst. Zu dieser Lösung wird nun weiterhin eine Lösung von 2,2 g Calciumchlorid (wasserfrei) in 20 ml entmineralisiertem Wasser getropft und der Ansatz wird darauf 1 Stunde bei 60 °C nachgerührt. Anschließend tropft man diesem noch eine Lösung aus 3,3 g Dodecylbenzol-4-sulfonsäure und 20 ml Ethanol hinzu, wonach das Gemisch abermals 1 Stunde bei 60 °C gerührt und das entstandene Produkt dann abgesaugt, mit Wasser chloridfrei gewaschen und bei 80 °C getrocknet wird.

Man erhält 10,8 g eines Pigmentdispergators, der jetzt nach der Umsetzung eine salzartige Struktur entsprechend der allgemeinen Formel III aufweist, worin $Z^{r+}$ (bei r = 2) das Kation $Ca^{2+}$ sowie $Y^-$ die Gruppe

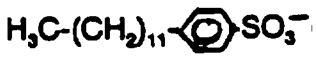

darstellt, für p sich der Wert 1 ergibt und n die Zahl 2 ist.

2 g dieses Pigmentdispergators werden mit 18 g feinkristallinem Pigment Violet 23 mechanisch gemischt. Man erhält eine Pigmentzubereitung, die im AM6-Lack transparente und farbstarke Lackierungen liefert.

Beispiel 10

250 g der Mahlgutsuspension, hergestellt gemäß Beispiel 5, werden in einem Rührgefäß mit 1,3 g Calciumchlorid (wasserfrei) beschickt und zunächst 1 Stunde bei 25 °C gerührt, worauf diesem Ansatz eine Lösung aus 3,9 g Natriumoleylsarkosinat, auf Basis einer natürlichen Ölsäure, und 150 ml Isobutanol (100 %ig) zugetropft wird. Anschließend bringt man das Gemisch zum Sieden und hält es weitere 5 Stunden bei Siedetemperatur am Rühren. Nach azeotropem Abdestillieren des Isobutanols durch Erhitzen bis auf 100 °C am Übergang wird die Pigmentzubereitung schließlich abgesaugt, mit Wasser chloridfrei gewaschen und bei 80 °C getrocknet.

Man erhält 53,6 g einer Pigmentzubereitung, in der die als Pigmentdispergator eingesetzte Dioxazinverbindung jetzt nach der Umsetzung eine salzartige Struktur entsprechend der allgemeinen Formel III aufweist, worin $Z^+$ (bei r = 2) das Kation $Ca^{2+}$ und $Y^-$ eine Oleylsarkosinatgruppe, auf Basis einer natürlichen Ölsäure, darstellt, für p sich der Wert 1 ergibt und n die Zahl 2,6 ist.

Im TSA-Lack erzielt man damit transparente und farbstarke Lackierungen. Die Rheologie der Lackfarbe wird mit Note 5 eingestuft. Der Glanzwert beträgt 72 und die Viskosität 3,9".

Wird Beispiel 10 aber ohne Pigmentdispergator wiederholt, so erhält man mit diesem Produkt bloß farbschwache Lackierungen, die stark geflockt sind.

Beispiel 11

1 g Pigmentdispergator der allgemeinen Formel II, worin $X^+$ für das $H^+$-Ion steht und n die Zahl 2 ist, wird mit 19 g feinkristallinem Pigment Violet 23 mechanisch gemischt.

Im TSA-Lack erzielt man mit dieser Pigmentzubereitung transparente und farbstarke Lackierungen.

Beispiel 12

30 g grobkristallines Rohpigment (Pigment Violet 23), in salzfreier Form wie in Beispiel 1, werden in ein zylindrisches 1-Liter-Kunststoffgefäß eingebracht, das mit 1400 g Cylpebs (Beschaffenheit wie in Beispiel 1) als Mahlkörper gefüllt ist. Dieser Vorlage fügt man noch 3 g Pigmentdispergator der allgemeinen Formel II, worin $X^+$ für das $H^+$-Ion steht und n die Zahl 3 ist, sowie 3 g Calciumchlorid (wasserfrei) hinzu und das Gemich wird nun 4 Stunden lang unter der Wirkung einer Schwingmühle (vom gleichen Typ wie in Beispiel 1) fein vermahlen. Danach wird das Mahlgut von den Mahlkörpern abgesiebt. Man erhält 32 g Mahlgut.

32 g des obigen Mahlguts werden In 87,5 g Isobutanol (85 %ig) eingetragen und zunächst 24 Stunden bei 25 °C

gerührt. Nach Zugabe von 150 ml Wasser bringt man die Mischung zum Sieden und beläßt dieselbe weitere 5 Stunden bei dieser Temperatur, worauf das Isobutanol durch Erhitzen bis auf 100 °C am Übergang azeotrop abdestilliert wird. Die Pigmentzubereitung wird dann abgesaugt, mit Wasser gewaschen und bei 80 °C getrocknet.

Man erhält 28,5 g einer Pigmentzubereitung, in der die als Pigmentdispergator eingesetzte Dioxazinverbindung jetzt nach dem Finish als Ca-Salz der allgemeinen Formel II vorliegt, worin $X^+$ das Metallkation $Ca^{2+}/2$ bedeutet und n die Zahl 3 ist. Bei der Ausprüfung der Pigmentzubereitung im AM6-Lack werden transparente und farbstarke Lackierungen erzielt. Die Rheologie der Lackfarbe wird mit Note 5 eingestuft. Der Glanzwert beträgt 60 und die Viskosität liegt bei 2,6".

Beispiel 13

30 g grobkristallines Rohpigment (Pigment Violet 23), analog in Beispiel 1 mit 26,6 % Salz aus der Synthese, werden in ein zylindrisches 1-Liter-Kunststoffgefäß eingebracht, das mit 1400 g Cylpebs (Beschaffenheit wie in Beispiel 1) als Mahlkörper gefüllt ist. Diesem Ansatz fügt man noch 1,1 g Pigmentdispergator der allgemeinen Formel II, worin $X^+$ für das $H^+$-Ion steht und n die Zahl 2 ist, sowie 0,8 g Stearylamin hinzu und das Gemisch wird nun 4 Stunden lang unter der Wrkung einer Schwingmühle (vom gleichen Typ wie in Beispiel 1) fein vermahlen. Danach wird das Mahlgut von den Mahlkörpern abgesiebt. Man erhält 27,3 g Mahlgut. 27,3 g des obigen Mahlguts werden in 87,5 g Isobutanol (85 %ig) eingetragen und zunächst 24 Stunden bei 25°C gerührt. Nach Zugabe von 150 ml Wasser bringt man das Gemisch zum Sieden und hält es weitere 5 Stunden bei dieser Temperatur. Anschließend wird das Isobutanol durch Erhitzen bis auf 100°C am Übergang azeotrop abdestilliert und die Pigmentzubereitung daraufhin abgesaugt, mit Wasser gewaschen und bei 80°C getrocknet.

Man erhält 18,8 g einer Pigmentzubereitung, in der die als Pigmentdispergator eingesetzte Dioxazinverbindung jetzt nach dem Finish als Stearylammoniumsalz der allgemeinen Formel II vorliegt, worin $X^+$ die Gruppe $N^+H_3[CH_2-(CH_2)_{16}-CH_3]$ bedeutet und n die Zahl 2 ist.

Bei der Ausprüfung dieser Pigmentzubereitung in PVC werden transparente und farbstarke Färbungen erzielt. Die Ausblutechtheit ist einwandfrei.

Beispiel 14

In einem Rührgefäß werden 400 g Polyphosphorsäure ($P_2O_5$-Gehalt 84 %) vorgelegt, auf 60°C erhitzt und in diesen Ansatz werden innerhalb von 1 Stunde 33,5 g grobkristallines Rohpigment (Pigment Violet 23), hergestellt in salzfreier Form wie in Beispiel 1, eingetragen. Nun wird derselbe auf 80°C geheizt und 4 Stunden bei dieser Temperatur nachgerührt. Die hierbei entstandene Lösung wird danach auf eine Mischung aus 1000 ml Wasser und 1750 g Eis gegossen, sowie 2 Stunden nachgerührt, worauf das abgeschiedene Produkt abgesaugt und mit Wasser neutral gewaschen wird.

Der angefallene feuchte Preßkuchen wird nun zunächst mit 200 ml Wasser angerührt, mit einer Lösung aus 100 ml Wasser und 2,8 g Pigmentdispergator der allgemeinen Formel II, worin $X^+$ für das $Na^+$-Ion steht und n die Zahl 2,2 ist, als 87,7 %iger wasserfeuchter Preßkuchen versetzt und 1 Stunde bei 25°C gerührt.

Anschließend wird eine Lösung aus 240 g Isobutanol (85 %ig) und 2,1 g eines cycloaliphatischen Amins auf Basis eines natürlichen Harzes, das überwiegend aus Abietylamin besteht, zugegeben und man hält das Gemisch unter weiterem Rühren 5 Stunden am Sieden. Dann wird das Isobutanol durch Erhitzen bis auf 100°C am Übergang azeotrop abdestilliert worauf die Pigmentzubereitung abgesaugt, mit Wasser neutral gewaschen und bei 80°C getrocknet wird.

Man erhält 36,7 g einer Pigmentzubereitung, in der die als Pigmentdispergator eingesetzte Dioxazinverbindung jetzt nach der Umsetzung als Ammoniumsalz der allgemeinen Formel II vorliegt, worin $X^+$ eine cycloaliphatisch substituierte Ammoniumgruppe auf Basis eines natürlichen Harzes, das überwiegend aus Abietylamin besteht, darstellt und n die Zahl 2,2 ist.

Bei der Ausprüfung der Pigmentzubereitung im AM6-Lack werden sehr transparente und farbstarke Lackierungen erzielt.

**Patentansprüche**

**1.** Pigmentzubereitungen, gekennzeichnet durch einen Gehalt an

a) einer Dioxazinverbindung der Formel I als Basispigment

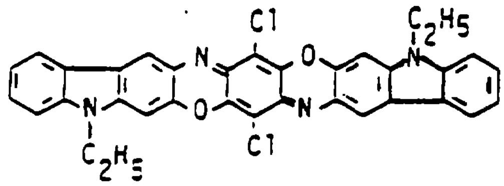

(I)

und als Pigmentdispergator(en) an

b) einer Dioxazinverbindung der allgemeinen Formel II

$$Q\text{-}[\text{-}SO_3^-X^+]_n \qquad (II),$$

in welcher

Q für einen n-wertigen Rest der Basisstruktur entsprechend Formel I steht,

$X^+$ das Hydron $H^+$ oder das Äquivalent $M^{m+}/m$ eines m-wertigen Metallkations bezeichnet, wobei m für den betreffenden Fall dann übereinstimmend eine der Zahlen 1, 2 oder 3 ist;
oder ein Ammoniumion mit der Struktur $N^+R^1R^2R^3R^4$ definiert, wobei die Substituenten $R^1$, $R^2$, $R^3$ und $R^4$ am quartären N-Atom einzeln für sich genommen sowie unabhängig voneinander jeweils als Wasserstoff oder eine der Gruppen $C_1$-$C_{30}$-Alkyl, $C_2$-$C_{30}$-Alkenyl oder $C_5$-$C_{30}$-Cycloalkyl, die durch Hydroxy, Di-($C_1$-$C_4$_alkyl)-amino, Carboxy oder Carboxamid substituiert sein können, oder weiterhin als Phenyl, durch $C_1$-$C_{18}$-Alkyl substituiertes Phenyl oder als eine (Poly)alkylenoxygruppe vom Typ -($CHR^5$-$CH_2$-O-)$_k$-H, in der $R^5$ für Wasserstoff oder $C_1$-$C_4$-Alkyl steht und k eine Zahl von 1 bis 30 ist, ausgewiesen sind;
oder wobei die Substituenten $R^1$ und $R^2$ gemeinsam sowie zusammen mit dem angrenzenden N-Atom ein aliphatisches, fünf- bis siebengliedriges heterocyclisches System, das ggf. noch weitere ringangehörige Heteroatome enthält, bilden können,
oder wobei die Substituenten $R^1$, $R^2$ und $R^3$ gemeinsam sowie zusammen mit dem angrenzenden N-Atom ein aromatisches, fünf- bis siebengliedriges heterocyclisches System, das ggf. noch weitere ringangehörige Heteroatome enthält und das ggf. zusätzlich benzokondensierte Ringe aufweist, bilden können,
während die in den beiden zuvor beschriebenen Ausgestaltungen des Cyclammoniumions jeweils nicht beteiligten R's für Wasserstoff stehen; und worin

n einen Zahlenwert zwischen 1 und 4 angibt; und/oder

c) einer Dioxazinverbindung der allgemeinen Formel III

$$Q\ \text{-}[\text{-}SO_3^-Z^{r+}pY^-]_n \ (III),$$

in welcher

Q für einen n-wertigen Rest der Basisstruktur entsprechend Formel I steht;

$Z^{r+}$ das Äquivalent $M^{r+}/r$ eines r-wertigen Metallkations bezeichnet, wobei r für den betreffenden Fall dann übereinstimmend die Zahl 2 oder 3 ist;

$Y^-$ einen der anionischen Reste $R^6$-$SO_3^-$ oder $R^7$-$COO^-$ charakterisiert, wobei die Substituenten $R^6$ und $R^7$ unabhängig voneinander jeweils als eine der Gruppen $C_1$-$C_{30}$-Alkyl oder $C_2$-$C_{30}$-Alkenyl, die ihrerseits durch eine brückenbildende Gruppierung aus der Reihe -O-, -NH-, -$NR^8$-, -S-, Phenylen, -CO-, -$SO_2$-, -$CHR^9$- oder -$CR^9R^{10}$-, oder durch eine sich ggf. wiederholende Kombination von solchen Brückengliedern unterschiedlichen Typs unterbrochen sein können und in denen $R^8$, $R^9$ und $R^{10}$ gleiches oder unterschiedliches $C_1$-$C_4$-Alkyl darstellen, oder weiterhin als Phenyl, durch $C_1$-$C_{30}$-Alkyl und/oder $C_1$-$C_4$-Alkoxy substituiertes Phenyl oder als eine (Poly)alkylenoxygruppe vom Typ -($CHR^{11}$-$CH_2$-O-)$_k$-H, in der $R^{11}$ für Wasserstoff oder $C_1$-$C_4$-Alkyl steht und k eine Zahl von 1 bis 30 ist, ausgewiesen sind; und worin

n einen Zahlenwert zwischen 1 und 4 sowie

p einen aus der Differenz (r - 1) errechenbaren Zahlenwert angeben,

wobei im Falle mehrfachen Vorhandenseins (n > 1) der Bestandteile X, Y und Z in den Verbindungen gemäß Formeln II und/oder III die Bedeutung der eben erwähnten Symbole nicht identisch sein muß.

**2.** Pigmentzubereitungen gemäß Anspruch 1, dadurch gekennzeichnet, daß als Pigmentdispergator b) eine Dioxazinverbindung der dort angegebenen allgemeinen Formel II vorliegt, in welcher

Q die dafür in Anspruch 1 festgelegte Bedeutung zukommt,
$X^+$ ein Kation vom Typ $H^+$ oder $Ca^{2+}/2$ oder ein Ammoniumion mit der Struktur $N^+H_3R^4$ bezeichnet, wobei $R^4$ als $C_{12}$-$C_{18}$-Alkyl, $C_{16}$-$C_{18}$-Alkenyl oder $C_{20}$-Cycloalkyl auf Basis eines natürlichen Harzes ausgewiesen ist; sowie
n einen Zahlenwert zwischen 2 und 3 angibt.

**3.** Pigmentzubereitungen gemäß Anspruch 1, dadurch gekennzeichnet, daß als Pigmentdispergator b) eine Dioxazinverbindung der dort angegebenen allgemeinen Formel II vorliegt, in welcher

Q die dafür in Anspruch 1 festgelegte Bedeutung zukommt;
$X^+$ ein Ammoniumion mit der Struktur $N^+R^1R^2R^3R^4$ bezeichnet, wobei $R^1$ und $R^2$ gemeinsam sowie zusammen mit dem angrenzenden N-Atom einen aliphatischen, heterocyclischen Fünf- oder Sechsring mit jeweils 1 bis 3 ringangehörigen, gleichen oder unterschiedlichen Heteroatomen bilden,
oder wobei $R^1$, $R^2$ und $R^3$ gemeinsam sowie zusammen mit dem angrenzenden N-Atom einen aromatischen, heterocyclischen Fünf- oder Sechsring mit 1 bis 3 ringangehörigen, gleichen oder unterschiedlichen Heteroatomen bilden und ein derartiger Heteroaromat ggf. zusätzlich einen ankondensierten benzoiden Ring aufweist,
und wobei dazu nicht beitragende R's am N-Atom jeweils Wasserstoff sind; sowie
n einen Zahlenwert zwischen 2 und 3 angibt.

**4.** Pigmentzubereitungen gemäß Anspruch 1, dadurch gekennzeichnet, daß als Pigmentdispersator c) eine Dioxazinverbindung der dort angegebenen allgemeinen Formel III vorliegt, in welcher

Q die dafür in Anspruch 1 festgelegte Bedeutung zukommt;
$Z^{r+}$ das Kation $Ca^{2+}$ bezeichnet und daher r = 2 beträgt;
$Y^-$ den Rest $R^6$-$SO_3^-$ charakterisiert, wobei $R^6$ als $C_8$-$C_{16}$-Alkylphenyl ausgewiesen ist,
oder den Rest $R^7$-$COO^-$ charakterisiert, wobei $R^7$ als $C_{11}$-$C_{19}$-Alkenyl ausgewiesen ist, sowie
n einen Zahlenwert zwischen 2 und 3 angibt und für
p sich der Zahlenwert 1 errechnet.

**5.** Pigmentzubereitungen gemäß einem oder mehreren der Ansprüche 1 bis 4, bestehend im wesentlichen aus

a) 99,5 bis 70 Gew.-% Basispigment der Formel 1,
b) und c) 0,5 bis 30 Gew.-% mindestens eines der Dispergatoren der Formeln II und/oder III,
d) 0 bis 5 Gew.-% eines nichtionischen Tensids, und
e) 0 bis 5 Gew.-% von üblichen Zuzatzstoffen,

wobei die Anteile der jeweiligen Komponenten auf das Gesamtgewicht (100 %) der Zubereitung bezogen sind.

**6.** Verfahren zur Herstellung der gemäß einem oder mehreren der Ansprüche 1 bis 5 definierten Pigmentzubereitungen, dadurch gekennzeichnet, daß die Oberflächenstruktur des Basispigments a) mit einem oder mehreren Pigmentdispergatoren b) und/oder c) gleichmäßig beschichtet wird.

**7.** Verfahren gemäß Anspruch 6, dadurch gekennzeichnet, daß man die Pigmentdispergatoren b) und/oder c) dem grobkristallinen Rohpigment a) bei dessen Feinverteilung im Verlauf einer Trockenmahlung oder Naßmahlung zusetzt.

**8.** Verfahren gemäß Anspruch 6, dadurch gekennzeichnet, daß man die Pigmentdispergatoren b) und/oder c) dem wasserfeuchten Preßkuchen des Basispigments a) zusetzt.

**9.** Verfahren gemäß Anspruch 6, dadurch gekennzeichnet, daß man die Pigmentdispergatoren b) und/oder c) dem feinteiligen Basispigment a) im Verlauf einer Lösungsmittelfinish-Behandlung zusetzt.

**10.** Verfahren gemäß Anspruch 6, dadurch gekennzeichnet, daß man die Pigmentdispergatoren b) und/oder c) in trokkenem Zustand mit dem feinteiligen Basispigment a) mechanisch vermischt.

11. Verwendung der gemäß einem oder mehreren der Ansprüche 1 bis 5 definierten Pigmentzubereitungen als Farbmittel zum Pigmentieren von hochmolekularen organischen Materialien natürlicher oder synthetischer Herkunft in Form plastischer Massen, Schmelzen, Spinnlösungen, Lacken, Anstrichfarben oder Druckfarben.

12. Verwendung gemäß Anspruch 11 zum Pigmentieren (Einfärben) von Lacksystemen aus der Klasse der Alkyd-/Melaminharz- oder Acryl-/Melaminharz-Einbrennlacke oder des Typs von Zweikomponentenlacken auf Basis von mit Polyisocyanat vernetzbaren Acrylharzen.

13. Verwendung gemäß Anspruch 11 zum Pigmentieren (Einfärben) von Druckfarben auf Basis Nitrocellulose.

14. Verwendung gemäß Anspruch 11 zum Pigmentieren (Einfärben) von verformbaren Kunststoffen.

**Claims**

1. A pigment preparation which comprises

a) a dioxazine compound of the formula I as base pigment

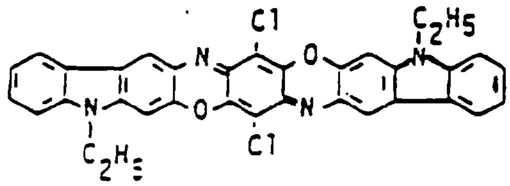

(I)

and, as pigment dispersant(s),
b) a dioxazine compound of the formula II

$$Q\text{-}[\text{-}SO_3^{-}X^{+}]_n \quad (II)$$

in which

Q is an n-valent radical of the base structure of the formula I;
$X^+$ is the hydrogen ion $H^+$ or the equivalent $M^{m+}/m$ of an m-valent metal cation, where m is then identically for the case in question one of the numbers 1, 2 or 3;
or is an ammonium ion having the structure $N^+R^1R^2R^3R^4$, in which the substituents $R^1$, $R^2$, $R^3$ and $R^4$ on the quaternary nitrogen atom are individually and independently of one another each hydrogen or one of the groups $C_1$-$C_{30}$-alkyl, $C_2$-$C_{30}$-alkenyl or $C_5$-$C_{30}$-cycloalkyl, which may be substituted by hydroxyl, di-($C_1$-$C_4$-alkyl)amino, carboxyl or carboxamide, or furthermore is phenyl, $C_1$-$C_{18}$-alkyl-substituted phenyl or a (poly)alkyleneoxy group of the $-(CHR^5\text{-}CH_2\text{-}O\text{-})_k\text{-}H$ type, in which $R^5$ is hydrogen or $C_1$-$C_4$-alkyl and k is a number from 1 to 30; or in which the substituents $R^1$ and $R^2$ jointly and together with the adjacent nitrogen atom can form an aliphatic, five- to seven-membered heterocyclic system, which, if desired, contains further hetero atoms belonging to the ring;
or in which the substituents $R^1$, $R^2$ and $R^3$ jointly and together with the adjacent nitrogen atom can form an aromatic, five- to seven-membered heterocyclic system, which, if desired, contains further hetero atoms belonging to the ring, and, if desired, additionally benzo-fused rings, while each of the R's not participating in the two forms described above of the cyclic ammonium ion is hydrogen; and in which
n is a numerical value between 1 and 4;

and/or
c) a dioxazine compound of the formula III

$$Q\text{-}[\text{-}SO_3^{-}Z^{r+}pY^{-}]_n \quad (III)$$

in which

Q is an n-valent radical of the base structure of the formula I;
$Z^{r+}$ is the equivalent $M^{r+}/r$ of an r-valent metal cation, where r is then identically for the case in question the number 2 or 3;
$Y^-$ is one of the anionic radicals $R^6\text{-}SO_3^-$ or $R^7\text{-}COO^-$, in which the substituents $R^6$ and $R^7$, independently

of one another, are each one of the groups $C_1$-$C_{30}$-alkyl or $C_2$-$C_{30}$-alkenyl, which in turn can be interrupted by a bridge-forming grouping from the series comprising -O-, -NH-, -$NR^8$-, -S-, phenylene, -CO-, -$SO_2$-, -$CHR^9$- or -$CR^9R^{10}$-, or by a combination of such bridging members of different types, which, if desired, can be repeating, and in which $R^8$, $R^9$ and $R^{10}$ are identical or different $C_1$-$C_4$-alkyl, or furthermore is phenyl, $C_1$-$C_{30}$-alkyl- and/or $C_1$-$C_4$-alkoxy-substituted phenyl or a (poly)alkyleneoxy group of the -($CHR^{11}$-$CH_2$-O-)$_k$-H type, in which $R^{11}$ is hydrogen or $C_1$-$C_4$-alkyl and k is a number from 1 to 30; and in which

n is a numerical value between 1 and 4 and
p is a numerical value which can be calculated from the difference (r - 1);

in which if components X, Y and Z are present more than once (n > 1) in the compounds of formulae II and/or III, the meanings of the symbols just mentioned do not have to be identical.

**2.** A pigment preparation as claimed in claim 1, wherein the pigment dispersant b) present is a dioxazine compound of the formula II given there, in which

Q has the meaning stated in claim 1,
$X^+$ is a cation of the $H^+$ or $Ca^{2+}/2$ type or an ammonium ion of the structure $N^+H_3R^4$, in which $R^4$ is $C_{12}$-$C_{18}$-alkyl, $C_{16}$-$C_{18}$-alkenyl or $C_{20}$-cycloalkyl based on a natural resin; and
n is a numerical value between 2 and 3.

**3.** A pigment preparation as claimed in claim 1, wherein the pigment dispersant b) present is a dioxazine compound of the formula II given there, in which

Q has the meaning stated in claim 1;
$X^+$ is an ammonium ion of the structure $N^+R^1R^2R^3R^4$, in which $R^1$ and $R^2$ jointly and together with the adjacent nitrogen atom form an aliphatic, heterocyclic five- or six-membered ring each having 1 to 3 identical or different hetero atoms belonging to the ring,
or in which $R^1$, $R^2$ and $R^3$ jointly and together with the adjacent nitrogen atom form an aromatic, heterocyclic five- or six-membered ring having 1 to 3 identical or different hetero atoms belonging to the ring and such a heteroaromatic, if desired, additionally contains a fused-on benzoid ring,
and in which noncontributing R's on the nitrogen atom are each hydrogen; and
n is a numerical value between 2 and 3.

**4.** A pigment preparation as claimed in claim 1, wherein the pigment dispersant c) present is a dioxazine compound of the formula III given there, in which

Q has the meaning stated in claim 1;
$Z^{r+}$ is the $Ca^{2+}$ cation and r is therefore 2;
$Y^-$ is the radical $R^6$-$SO_3^-$, in which $R^6$ is $C_8$-$C_{16}$-alkylphenyl,
or is the radical $R^7$-$COO^-$, in which $R^7$ is $C_{11}$-$C_{19}$-alkenyl; and
n is a numerical value between 2 and 3 and
p has a calculated numerical value of 1.

**5.** A pigment preparation as claimed in one or more of claims 1 to 4, which substantially comprises

a) 99.5 to 70% by weight of base pigment of the formula I,
b) and c) 0.5 to 30% by weight of at least one of the dispersants of the formulae II and/or III,
d) 0 to 5% by weight of a nonionic surfactant, and
e) 0 to 5% by weight of customary additives, the percentages of the particular components being based on the total weight (100%) of the preparation.

**6.** A process for the preparation of a pigment preparation defined as claimed in one or more of claims 1 to 5, which comprises uniformly coating the surface structure of the base pigment a) with one or more pigment dispersants b) and/or c).

**7.** The process as claimed in claim 6, wherein pigment dispersants b) and/or c) are added to the coarse-crystalline crude pigment a) during its comminution in the course of dry milling or wet milling.

**8.** The process as claimed in claim 6, wherein pigment dispersants b) and/or c) are added to the water-moist presscake of base pigment a).

**9.** The process as claimed in claim 6, wherein pigment dispersants b) and/or c) are added to the finely divided base pigment a) in the course of a solvent finish treatment.

**10.** The process as claimed in claim 6, wherein pigment dispersants b) and/or c) are mixed mechanically in dry form with the finely divided base pigment a).

**11.** Use of a pigment preparation defined as claimed in one or more of claims 1 to 5 as colorant for pigmenting high-molecular-weight organic materials of natural or synthetic origin in the form of plastic compositions, melts, spinning solutions, industrial coatings, architectural coatings or printing inks.

**12.** Use as claimed in claim 11 for pigmenting (coloring) coating systems from the class of alkyd/melamine baking finishes or acrylic/melamine baking finishes or of the two-component paint type based on acrylic resins crosslinkable with polyisocyanate.

**13.** Use as claimed in claim 11 for pigmenting (coloring) printing inks based on nitrocellulose.

**14.** Use as claimed in claim 11 for pigmenting (coloring) moldable plastics.

**Revendications**

**1.** Préparations de pigments, caractérisées par une teneur en

a) un composé de type dioxazine de formule I en tant que pigment de base

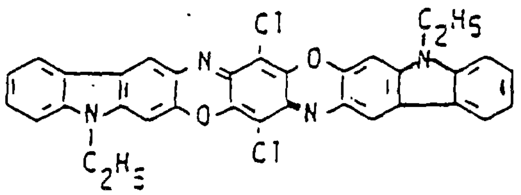

(I)

et en tant que dispersant(s) de pigments,
b) un composé de type dioxazine de formule générale II :

$$Q\text{-}[SO_3^-X^+]_n \qquad (II),$$

dans laquelle

Q preprésente un reste n-valent de structure de base correspondant à la formule I ;

$X^+$ pdésigne le proton $H^+$ ou bien l'équivalent $M^{m+}/m$ d'un cation métallique m-valent, m étant alors selon le cas concerné un des chiffres 1, 2 ou 3 ;
ou bien définit un ion ammonium ayant la structure $N^+R^1R^2R^3R^4$, les substituants $R^1$, $R^2$, $R^3$ et $R^4$ sur l'atome quaternaire N pris isolément en soi ainsi qu'indépendamment les uns des autres, étant identifiés à chaque fois comme étant un hydrogène ou un des groupes alkyle en $C_1$-$C_{30}$, alcényle en $C_2$-$C_{30}$ ou cycloalkyle en $C_5$-$C_{30}$, qui peuvent être substitués par des hydroxy, di-(alkyl en $C_1$-$C_4$)-amino, carboxy ou carboxamide, ou bien de plus comme étant un phényle, un phényle substitué par des alkyles en $C_1$-$C_{18}$ ou bien comme étant un groupe (poly)alkylèneoxy de type $-(CHR^5\text{-}CH_2\text{-}O\text{-})_k\text{-}H$, dans lequel $R^5$ représente un hydrogène ou un alkyle en $C_1$-$C_4$ et k étant un nombre allant de 1 à 30 ; ou bien les substituants $R^1$ et $R^2$ pouvant former ensemble et conjointement avec l'atome N vicinal, un système aliphatique, hétérocyclique de 5 à 7 chaînons, qui contient éventuellement encore d'autres hétéroatomes appartenant au cycle, les substituants $R^1$, $R^2$ et $R^3$pouvant former ensemble un cycle conjointement avec l'atome N vicinal, un système aromatique, hétérocyclique de 5 à 7 chaînons, qui contient éventuellement encore d'autres hétéroatomes appartenant au cycle et qui possède éventuellement des cycles supplémentaires fusionnés au benzène, alors que les R à chaque fois non impliqués dans les deux développements précédemment décrits de l'ion cyclo-ammonium représentent des hydrogènes ; et dans laquelle

n exprime une valeur numérique comprise entre 1 et 4 ;

et/ou

c) un composé de type dioxazine de formule générale III

$$Q\text{-}[SO_3^{-}Z^{r+}pY^{-}]_n \qquad \text{(III)},$$

dans laquelle

Q représente un reste n-valent de structure de base correspondant à la formule I ;

$Z^{r+}$ désigne l'équivalent $M^{r+}/r$ d'un cation métallique r-valent, r étant alors selon le cas concerné le chiffre 2 ou 3 ;

$Y^{-}$ caractérise un des restes anioniques $R^6\text{-}SO_3^{-}$ ou bien $R^7\text{-}COO^{-}$, les substituants $R^6$ et $R^7$ étant identifiés, indépendamment l'un de l'autre, à chaque fois comme étant un des groupes alkyle en $C_1\text{-}C_{30}$ ou bien alcényle en $C_2\text{-}C_{30}$, qui peuvent de leur côté être interrompus par un groupement formant un pont choisi dans la série des -O-, -NH-, $-NR^8-$, -S-, phénylène, -CO-, $-SO_2-$, $-CHR^9-$ ou bien $-CR^9R^{10}-$, ou bien par une combinaison éventuellement récurrente de tels chaînons de pont de type différent et dans lesquels $R^8$, $R^9$ et $R^{10}$ représentent des alkyles en $C_1\text{-}C_4$ identiques ou différents, ou bien de plus comme étant un phényle, un phényle substitué par des alkyle en $C_1\text{-}C_{30}$ et/ou alcoxy en $C_1\text{-}C_4$ ou bien comme étant un groupe (poly)alkylèneoxy de type $-(CHR^{11}\text{-}CH_2\text{-}O\text{-})_k\text{-}H$, dans lequel $R^{11}$ représente un hydrogène ou un alkyle en $C_1\text{-}C_4$ et k est un nombre allant de 1 à 30 ; et dans laquelle

n indique une valeur numérique comprise entre 1 et 4 ainsi que

p une valeur numérique que l'on peut calculer à partir de la différence (r - 1) ;

dans le cas d'existences multiples (n > 1) des composants X, Y et Z dans les composés selon les formules II et/ou III, la signification des symboles qui viennent d'être mentionnés ne devant pas être identique.

**2.** Préparations de pigments selon la revendication 1, caractérisées en ce que, en tant que dispersant de pigment b), se trouve un composé de type dioxazine de formule générale II indiquée, dans laquelle

Q retrouve la signification établie à cet effet dans la revendication 1,

$X^+$ désigne un cation de type $H^+$ ou $Ca^{2+}/2$ ou bien un ion ammonium ayant la structure $N^+H_3R^4$, $R^4$ étant identifié comme étant un alkyle en $C_{12}\text{-}C_{18}$, un alcényle en $C_{16}\text{-}C_{18}$ ou un cycloalkyle en $C_{20}$ à base d'une résine naturelle ; ainsi que

n indique une valeur numérique comprise entre 2 et 3.

**3.** Préparations de pigments selon la revendication 1, caractérisées en ce que, en tant que dispersant de pigment b), se trouve un composé de type dioxazine de formule générale II indiquée, dans laquelle :

Q retrouve la signification établie à cet effet dans la revendication 1 ;

$X^+$ désigne un ion ammonium ayant la structure $N^+R^1R^2R^3R^4$, $R^1$ et $R^2$ formant ensemble et conjointement avec l'atome N vicinal, un cycle à 5 ou 6 chaînons aliphatique, hétérocyclique ayant à chaque fois de 1 à 3 hétéroatomes identiques ou différents appartenant au cycle,
ou bien $R^1$, $R^2$ et $R^3$ forment ensemble et conjointement avec l'atome N vicinal un cycle à 5 ou 6 chaînons aromatique, hétérocyclique, ayant de 1 à 3 hétéroatomes identiques ou différents appartenant au cycle et un tel cycle hétéroaromatique possède éventuellement en plus un cycle benzénique condensé, et les R ne participant pas à cet effet sur l'atome N étant à chaque fois des hydrogènes ;
ainsi que

n signifie une valeur numérique comprise entre 2 et 3.

**4.** Préparations de pigments selon la revendication 1, caractérisées en ce que, en tant que dispersant de pigment c), se trouve un composé de type dioxazine de formule générale III donnée, dans laquelle

Q retrouve la signification établie à cet effet dans la revendication 1 ;

$Z^{r+}$ désigne le cation $Ca^{2+}$ et par conséquent r vaut 2 ;

$Y^{-}$ caractérise le reste $R^6\text{-}SO_3^{-}$, $R^6$ étant identifié comme étant un (alkyl en $C_8\text{-}C_{16}$)-phényle, ou bien caractérise le reste $R^7\text{-}COO^{-}$, $R^7$ étant identifié comme étant un alcényle en $C_{11}\text{-}C_{19}$ ; ainsi que

n indique une valeur numérique comprise entre 2 et 3 et en ce qui concerne

p,  il se calcule comme étant la valeur numérique 1.

**5.** Préparations de pigments selon l'une ou plusieurs des revendications 1 à 4, formées pour l'essentiel

a) de 99,5 à 70% en poids de pigment de base de formule I,
b) et c) de 0,5 à 30% en poids d'au moins un des dispersants de formules II et/ou III,
d) de 0 à 5% en poids d'un agent de surface non-ionique, et
e) de 0 à 5% en poids d'additifs classiques,

les fractions de chacun des composants étant rapportées au poids total (100%) de la préparation.

**6.** Procédé de préparation des préparations de pigments définies selon l'une ou plusieurs des revendications 1 à 5, caractérisé en ce que la structure de surface du pigment de base a) est enduite avec un ou plusieurs des dispersants de pigments b) et/ou c) de manière homogène.

**7.** Procédé selon la revendication 6, caractérisé en ce qu'on ajoute les dispersants de pigments b) et/ou c) au pigment brut a) à cristaux grossiers lors de la division fine au cours d'un broyage à sec ou d'un broyage à l'état mouillé.

**8.** Procédé selon la revendication 6, caractérisé en ce qu'on ajoute les dispersants de pigments b) et/ou c) au gâteau pressé humide du pigment de base a).

**9.** Procédé selon la revendication 6, caractérisé en ce qu'on ajoute les dispersants de pigments b) et/ou c) au pigment de base a) finement divisé au cours d'un traitement de finissage au solvant.

**10.** Procédé selon la revendication 6, caractérisé en ce qu'on mélange mécaniquement les dispersants de pigments b) et/ou c) dans un état séché avec le pigment de base a) finement divisé.

**11.** Utilisation des préparations de pigments définies selon l'une ou plusieurs des revendications 1 à 5 en tant que colorants pour la pigmentation de matières organiques à haut poids moléculaire d'origine naturelle ou synthétique à l'état fondu ou bien sous la forme de masses plastiques, de solutions de filage, de laques, de peintures ou d'encres d'impression.

**12.** Utilisation selon la revendication 11, afin de pigmenter (de mettre en couleur) des systèmes de laques appartenant à la classe des laques au four à base de résine alkyde/mélamine ou acrylique/mélamine ou bien de type de laques à deux composants à base de résine acrylique réticulable avec des polyisocyanates.

**13.** Utilisation selon la revendication 11, afin de pigmenter (de mettre en couleur) des encres d'impression à base de nitrocellulose.

**14.** Utilisation selon la revendication 11, afin de pigmenter (de mettre en couleur) des matières plastiques déformables.